Europäisches Patentamt

European Patent Office

Office européen des brevets

(11) Publication number: 0 378 968
A2

# EUROPEAN PATENT APPLICATION

(21) Application number: 89810953.3

(51) Int. Cl.⁵: G01N 13/00

(22) Date of filing: 13.12.89

(30) Priority: 22.12.88 GB 8829942

(43) Date of publication of application:
25.07.90 Bulletin 90/30

(84) Designated Contracting States:
CH DE FR GB IT LI NL

(71) Applicant: ISIS INNOVATION LIMITED
2 South Parks Road
Oxford OX1 3UB(GB)

Applicant: CIBA-GEIGY AG
Klybeckstrasse 141
CH-4002 Basel(CH)

(72) Inventor: Compton, Richard Guy
17 Blackhall Road
Oxford OX1 3QF(GB)
Inventor: Unwin, Patrick Robert
17 Whitehouse Drive
Gt. Preston Leeds LS26 8BP(GB)
Inventor: Barwise, Anthony Jevon
37 Greenleach Lane
Worsley Manchester(GB)
Inventor: Pritchard, Keith Llewellyn
29 Bilter Road
West Harrow Middlesex HA1 4OS(GB)

(54) Method and flow cell for the measurement of the kinetics of processes occurring at a solid-liquid interface.

(57) The invention provides a method and a flow cell for determining the kinetics of a process occurring at the interface between a liquid and a solid which comprises mounting the solid on one wall of a flow cell, flowing the liquid through the cell whereby it passes over the surface of the solid under fully developed laminar conditions, and then past a detector for detecting the concentration of a liquid phase reactant or reaction product downstream of the solid, thereby allowing the kinetics to be determined.

FIG.1

# Method and flow cell for the measurement of the kinetics of processes occurring at a solid-liquid interface

The present invention relates to a method and a flow cell for the measurement of the kinetics of processes occurring at a solid-liquid interface.

Kinetic processes at a solid-liquid interface are notoriously difficult to study, particularly when the reaction of interest takes place at the surface of a non-conducting solid.

We have now developed a method and a flow cell for determining heterogeneous reaction kinetics which, unlike other methods and flow cells, gives rate law information in terms of the surface concentrations of the reacting species.

According to the present invention there is provided a method for determining the kinetics of a process occurring at the interface between a liquid and a solid which comprises mounting the solid on one wall of a flow cell, flowing the liquid through the cell whereby it passes over the surface of the solid under fully developed laminar conditions, and then past a detector for detecting the concentration of a liquid phase reactant or reaction product downstream of the solid, thereby allowing the kinetics to be determined.

The invention also provides a flow cell suitable for use in the method of the invention, the cell having said solid mounted on a wall thereof whereby when the liquid is flowed through the cell it passes over said solid under fully developed laminar conditions, said flow cell having means for detecting the concentration of a liquid reactant or reaction product downstream of the solid.

The liquid may be a reactant itself or a solution of a reactant in a solvent such as water.

The solid may be mounted on a wall of the cell using a suitable adhesive. A wall of the cell may be provided with a suitable recess into which the solid is placed, so that the wall and solid present a flat surface which assists in allowing flow under laminar conditions.

Various detectors may be used in the present invention, the most suitable being chosen according to the reaction being studied.

The reactant may be detected amperometrically, for instance by measurement of the steady-state transport-limited current at an electrode located immediately downstream of the solid. This provides a value for the concentration of reactant reaching the electrode surface which in turn, is governed by the kinetics of the reaction between liquid and solid - the faster the heterogeneous reaction, the smaller the measured current, for a given flow rate and cell geometry.

Instead of an amperometric detector, a potentiometric pH sensor may be used where the reaction involves pH changes. Other detectors which may be used include other ion-selective electrodes and UV or visible light spectroscopes in appropriate cases.

The solid may be conducting or non-conducting.

Examples of processes which can be measured according to the invention include the rate of bleaching of dyed cloth with a bleaching agent; the dissolution or precipitation of calcium carbonate under different pH conditions, e.g. using dilute hydrochloric acid at a pH above 2; and the effect of scale inhibitors on this dissolution/precipitation. The method of the invention may also be used as an analytical technique to monitor concentrations of water treatment additives.

The cell and the liquid flowing through it are preferably maintained at a constant temperature e.g. by placing it in a thermostatically controlled chamber. Part of the tubing through which the liquid is delivered to the cell may also be located in such a chamber. The liquid may be flowed through the cell using gravity feed or it may be pumped through to provide a steady and variable flow of liquid. Because of the possibility of pulses when a pump is used, gravity feed is preferred.

The flow system into which the cell is plumbed is generally designed so that the liquid flows to waste rather than recirculates. It may consist, for example, of a glass reservoir and polytetrafluoroethylene (PTFE) tubing jacketed with an argon-purged tube to prevent ingress of oxygen. A platinum gauze counter electrode may be located immediately downstream of the cell, connected to the cell by PTFE tubing, ensuring that counter electrode products are flushed away and do not interfere with the solid-liquid reaction and electrode processes. The liquid may be fed from the reservoir via a calibrated capillary, adjustment of the rate of flow of the liquid being achieved by varying the height of the reservoir.

The invention is illustrated by reference to the accompanying drawing in which

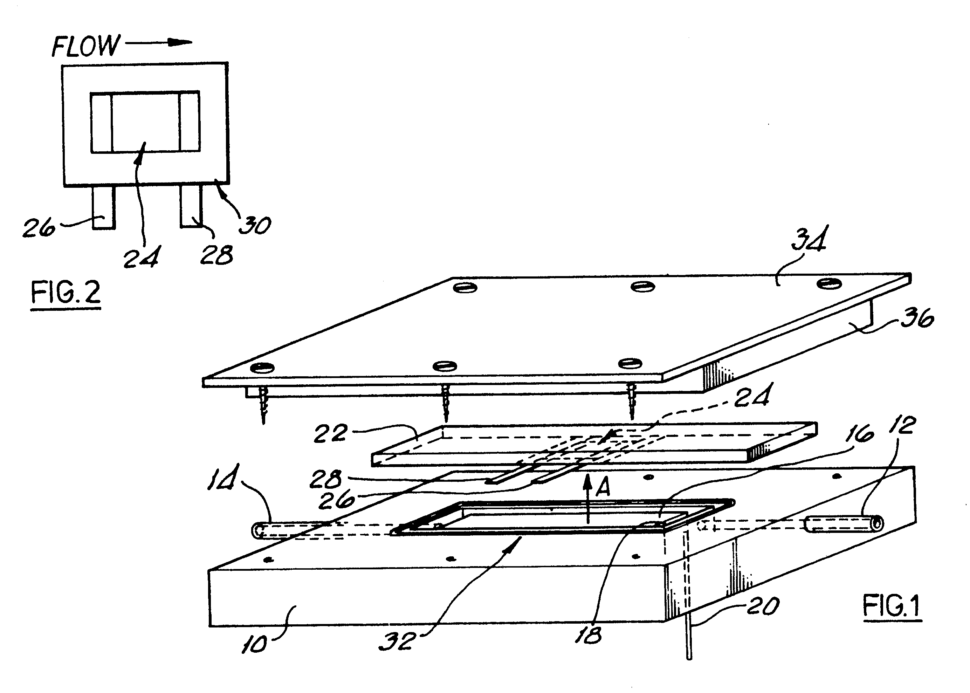

Fig. 1 is an exploded view of an exemplary embodiment of a flow cell used to carry out the inventive method, and

Fig. 2 is a view of the solid electrode arrangement from underneath in the direction of arrow A in Fig. 1.

Referring to the drawing, the flow cell comprises channel unit 10 having inlet 12 and outlet 14 for a liquid which passes through the main flow channel 16. The depth of channel 16 may be varied by the use of spacers (not shown) in order to make the cell suitable for measuring different rate constants e.g. in the range $10^{-5}$ to $10^0$ cms$^{-1}$ for first order processes. Pressure may be equalised by providing deeper sections at the end of channel 16. Duct 18 at the upstream end contains silver wire which acts as a reference electrode 20 if required by the detection mode employed.

Cover plate 22 bears the solid 24 and electrodes 26,28 which may be of platinum foil. Upstream electrode 26 serves to monitor the concentration of the liquid reactant before reaction with the solid. Downstream electrode 28 should be positioned close to or touching solid 24. The length of electrode 28 i.e. length in the direction of liquid flow should be sufficiently long to make a measurement, but not so long that unreacted liquid from near the opposite wall of the cell is detected. An optimum length can be readily determined by simple experiment depending on the flow rate used. A suitable length, for a solid length of 4 mm and a channel height of 0.4 mm is about 0.5 mm.

Solid 24 and electrodes 26,28 carry masking tape 30, suitably of PTFE so as to ensure that, when assembled, the solid and electrodes are within the region in which the liquid flow is of a plug nature. For example, if the channel is 6 mm wide, a suitable width for the solid 24 and electrodes 26,28 is 4 mm.

The channel 16 is formed by mating channel unit 10 with cover plate 22, O-ring 32 acting as a seal. Cover plate 22 is held in position by screwing down plate 34 carrying resilient block 36, e.g. a rubber block. Cover plate 22 is positioned so that the leading edge of upstream electrode 26 is located sufficiently downstream that the laminar flow within the cell is sufficiently developed at this point. A counter electrode (not shown) is located downstream of the cell.

The invention is illustrated by the following Examples.

## Example 1:

Using a flow cell, constructed in Perspex, as shown in the drawings at 25°C a piece of cotton cloth dyed with the dyestuff Direct Red 80 is mounted in the cell bleached by a dilute aqueous solution of bromine ($10^{-3}$M), using gravity feed. The detector electrode is at a potential which reduces $Br_2$ to $Br^-$ and the current used as a measure of the extent of reaction of the bromine at the cloth. It is found that the bleaching proceeds heterogeneously with first order kinetics and a rate constant of $7 \times 10^{-4}$ cms$^{-1}$.

## Example 2:

Using a flow cell constructed in Perspex, as shown in the drawings, at 25°C, calcium carbonate, in the form of Iceland Spar is the solid. A crystal is mounted in the cell using an epoxy resin adhesive so as to present a cleavage plane to the solution. The length of the crystal is 4 mm and the length of the electrodes is 0.5 mm (both lengths in the direction of flow). The liquid is dilute 2 mM HCl flowed through the cell, using gravity feed. The reduction of $H^+$ to $H_2$ on the detector electrode is used to monitor the reaction at the crystal surface. The heterogeneous kinetics are shown to involve a first order process with a rate constant of 0.043 cms$^{-1}$.

Measurements at higher pH values (above 5) are carried out using a potentiometric pH sensor in place of the amperometric $H^+$ detector.

## Claims

1. A method for determining the kinetics of a process occurring at the interface between a liquid and a solid which comprises mounting the solid on the wall of a flow cell, flowing the liquid through the cell whereby it passes over the surface of the solid under fully developed laminar conditions, and then past a detector for detecting the concentration of a liquid phase reactant or reaction product downstream of the solid, thereby allowing the kinetics to be determined.

2. A method as claimed in claim 1 characterized in that the liquid is the reactant or a solution of a reactant in a solvent.

3. A method as claimed in claim 1 or 2 characterized in that the detector is an amperometric detector electrode, a potentiometric pH sensor, an ion-selective electrode or a UV or visible light spectroscope.

4. A method as claimed in any preceding claim characterized in that the solid is non-conducting.

5. A method as claimed in any preceding claim, characterized in that the solid is dyed cotton and the liquid is a dilute aqueous solution of bromine.

6. A method as claimed in any of claims 1 to 4 characterized in that the solid is calcium carbonate and the liquid is a dilute solution of hydrochloric acid in water at a pH above 2.

7. A method as claimed in any preceeding claim characterized in that the cell and the liquid flowing through the cell are maintained at a constant temperature.

8. A method as claimed in any preceeding claim characterized in that the liquid is flowed through the cell using gravity feed.

9. A method as claimed in any preceeding claim, characterized in that the solid is placed into a recess in the wall of the cell, such that the wall and the solid present a flat surface.

10. A flow cell for determining the kinetics of a process occurring at the interface between a liquid and a solid, which comprises a channel unit (10) having a main flow channel (16), which is formed by a recess in the channel unit (16) and communicates with an inlet (12) and an outlet (13) in the channel unit (10) for the liquid, and an attachable sealing cover plate (22) bearing an upstream (26) and a downstream electrode (28) and the desired solid (24) on the underneath side which communicates with the flow channel (16) when assembled.

11. A flow cell as claimed in claim 10, characterized in that the main flow channel (16) communicates with a duct (18) in the upstream part of the channel unit (10), which duct (18) is provided to carry a reference electrode (20), which preferably is made of silver.

12. A flow cell as claimed in claim 10 or 11, characterized in that the upstream and the downstream electrodes (26,28) are made of platinum foil.

13. A flow cell as claimed in any one of the claims 10 to 12, characterized in that the cover plate (22) is held in position by a screwing down plate (34).

14. A flow cell as claimed in any one of the claims 10 to 13, characterized in that the depth of the main flow channel (16) is variable by the use of spacers.

15. A flow cell as claimed in any one of the claims 10 to 14, characterized in that the sealing cover plate (22) is provided with a recess for the solid, such that the cover plate and the solid when mounted present a flat surface.

FIG.1

FIG.2

FLOW